# EUROPEAN PATENT APPLICATION

(11) **EP 3 217 344 A1**
(43) Date of publication of application: **13.09.2017**
(21) Application number: 17425026.6
(22) Date of filing: 09.03.2017
(51) Int. Cl.: G06Q 30/00

(54) **SYSTEM AND ELECTRONIC DEVICE FOR CONTROLLING THE AUTHENTICITY OF A PRODUCT**

(30) Priority: 10.03.2016 IT UA20161528
(71) Applicant: Scarcella, Giacomo, 00169 Rome (IT)
(72) Inventor: Scarcella, Giacomo, 00169 Rome (IT)
(74) Representative: Bellomia, Paolo

(57) **Abstract**

Described is an electronic device (2) for controlling the authenticity of a product, comprising a control unit (2-1.1), a transceiver (2-3) and a first memory (2-1.2). The first memory (2-1.2) is configured to store a primary security code (SC_1) uniquely associated with the product and a firmware object code which can be run on the control unit. The transceiver (2-3) is configured to receive (t3) an input data signal (S_d) which carries a request (REQ) for the primary security code (SC_1), and to forward the request on an internal reception/transmission signal (Si_rx_tx). The control unit (2-1.1) is configured to receive (t3) the internal reception/transmission signal (Si_rx_tx) which carries the request for the primary security code (SC_1), read from the first memory (2-1.2) the value of the primary security code (SC_1) and generate the internal reception/transmission signal (Si_rx_tx) which carries the read value of the primary security code (SC_1). The transceiver (2-3) is further configured to receive the internal reception/transmission signal (Si_rx_tx) which carries the read value of the primary security code (SC_1) and to forward (t4) the value of the primary security code output on the data signal (S_d).

## Description

This invention relates in general to the sector for protection against counterfeiting. More specifically, this invention relates to a system and electronic device for controlling the authenticity of a product sold, in particular products of value such as, for example, bags and watches.

There are prior art techniques for controlling the authenticity of a product.

According to a prior art technique, use is made of paper or plastic labels fixed to the product intended for sale, which describe the characteristics of the product and declare the authenticity; the labels have the drawback that they may be easily copied by the counterfeiter.

Another prior art technique is that of using holograms applied on the labels or on the fabrics, which are difficult to copy.

Another prior art technique is that of using electronic labels (for example RFID) applied inside the product, which may be detected only with suitable external readers.

The Applicant has observed that the prior art for controlling the authenticity of a product has at least one of the following drawbacks:
- they do not guarantee the authenticity of the product with sufficient reliability;
- they can be easily got around;
- they are too complex for the individual purchasing the product;
- it is not always possible for the purchaser to carry out the authenticity control.

This invention relates to an electronic device for controlling the authenticity of a product as defined in the attached claim 1 and by its preferred embodiments described in the dependent claims from 2 to 4.

The Applicant has perceived that the electronic authenticity control system according to this invention has the following advantages:
- improves the reliability of controlling the authenticity of the product sold, since it uses a procedure for controlling the authenticity which is automatic, thereby reducing the use of manual steps;
- reduces the probability of being able to carry out counterfeiting of the product;
- is not very complex for the individual purchasing the product;
- is inexpensive relative to the functions performed;
- the purchaser of the product can carry out the authenticity control;
- reduces the "mirror" effect due to formation of parallel systems for controlling authenticity.

This invention also relates to an electronic system for controlling the authenticity of a product as defined in the attached claim 5 and by its preferred embodiments described in the dependent claims 6 and 7.

This invention also relates to a method for controlling the authenticity a product as defined in the attached claim 8 and by its preferred embodiment described in dependent claim 9.

This invention also relates to a computer program as defined in the attached claim 10.

Further characteristic features and advantages of the invention are given in the following description of a preferred embodiment and of its variants provided by way of example with reference to the accompanying drawings, in which:
- Figure 1 schematically shows a block diagram of an electronic system for controlling the authenticity of a product in accordance with an embodiment of the invention;
- Figure 2 shows more in detail a block diagram of an electronic device for controlling the authenticity of a product according to the invention used in the control system of Figure 1;
- Figures 3A-3B show a possible time diagram of a primary procedure for controlling the authenticity of a product sold, by means of the electronic authenticity control device according to the invention;
- Figures 4A-4B show a possible time diagram of a secondary procedure for controlling the authenticity of a product sold, by means of the electronic authenticity control device according to the invention;
- Figure 5 shows an example of the outside shape of the case of the electronic authenticity control device according to the invention.

It should be noted that in the following description blocks, components or modules which are identical or similar are indicated in the drawings with the same reference numerals, even if they are shown in different embodiments of the invention.

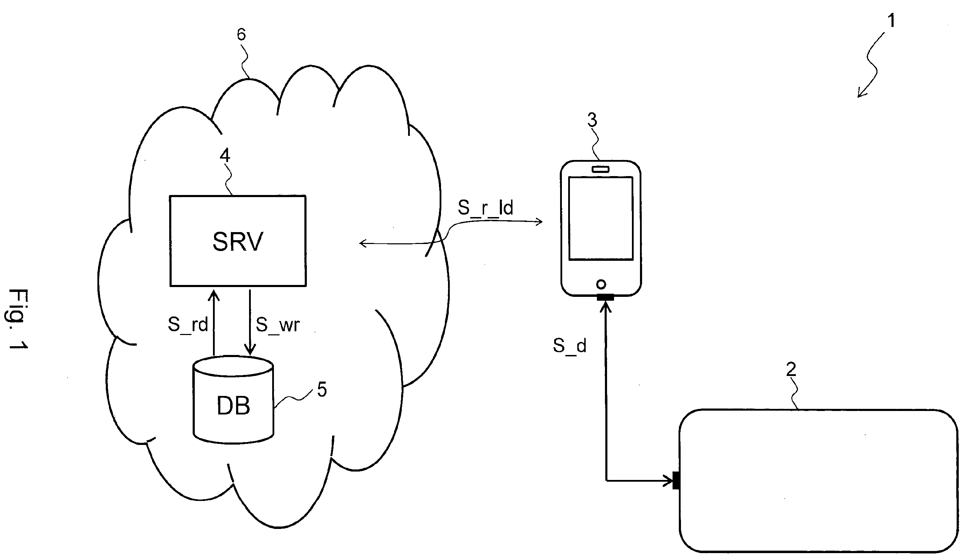

Figure 1 shows the block diagram of an electronic system 1 for controlling the authenticity of a product according to an embodiment of the invention.

The electronic control system 1 comprises:
- an electronic device 2 for controlling the authenticity of a product;
- an electronic device 3, for example of the portable type;
- a remote server 4;
- a database 5;
- a telecommunication network 6.

The electronic authenticity control device 2 is designed to activate a procedure for controlling the authenticity of a product sold, in particular products of value such as, for example, bags, watches and items of clothing.

The electronic authenticity control device 2 is uniquely associated with the product sold, that is to say, the product is sold together with the electronic authenticity control device 2.

For example:
- in the case of an item of clothing, the electronic authenticity control device 2 is fixed to the item of clothing by means of a hook or a strap equipped with an anti-pull security system, in a similar way to the paper or plastic labels;
- in the case of a bag, the electronic authenticity control device 2 is fixed (by means of a hook or a strap) to the tie of one of the sliders of a hinge of the bag, or is fixed to a handle or shoulder strap, or to any other structural element of the bag.

The electronic device 3 is possessed by the purchaser of the product and is designed to execute a software application (referred to below as "client security application"), which allows, together with a browser installed in the electronic device 3, to execute the process for controlling the authenticity of the product. Advantageously, the client security application comprises the network address associated with the server 4, such as, for example, the IP address of the server 4 belonging to a network 6 of the TCP/IP type.

The electronic device 3 is, for example, of the portable type and may be selected from the following:
- a smartphone (for example, an iPhone);
- a tablet (for example, an iPad);
- a laptop.

Alternatively, the electronic device 3 is fixed a computer.

The client security application software may have (with the same functionality) two different versions, depending on the type of electronic device 3 on which it is executed.

If the electronic device 3 is of the portable type, in particular a smartphone or a tablet, the client security application will be a APP which is downloaded by the user from an authorised website, before starting the procedure for controlling the authenticity of the product; it will therefore be the duty of the product brand to provide the APP in the versions compatible with the a smartphones or tablets available on the market.

If the electronic device 3 is a personal computer of the fixed or portable type, the client security application is stored in a memory 2-2 inside the electronic authenticity control device 2 and the application will be executed directly on the microprocessor of the fixed or portable personal computer, remaining stored in the memory 2-2 of the electronic authenticity control device 2.

The electronic device 3 is connected on one side to the electronic authenticity control device 2 and on the other side to the remote server 4.

The electronic authenticity control device 2 is connected with the electronic device 3 by means of an electricity cable which carries a data signal S_d.

Alternatively, the electronic authenticity control device 2 is connected with the electronic device 3 directly through a port, or by means of an adapter connector.

The electric cable, the port and the adapter connector are, for example, of the USB type in the current and future versions.

Advantageously, the data exchanged between the electronic authenticity control device 2 and the electronic device 3 is protected by means of encrypting.

The connection between the electronic device 3 and the remote server 4 can occur by means of a telecommunications network 6 of the fixed type (for example, the Internet) or of mobile phone type (for example, third or fourth generation), or both.

For the purposes of explaining the invention it is considered for simplicity that the electronic device 3 is of the portable type and that the connection between the portable electronic device 3 and the telecommunication network 6 occurs by means of a long distance radio signal S_r_ld of the mobile phone type (for example, third or fourth generation).

The remote server 4 is located far from the electronic device 3, to which it is connected by means of the telecommunication network 6.

More specifically, the remote server 4 is positioned at the premises of the product manufacturer to which with the electronic authenticity control device 2 is associated, or at the premises of a firm authorised by the manufacturer.

The remote server 4 is designed to execute a software application (referred to below as "server security application") which implements a web service for controlling the authenticity of products using a client-server type architecture; moreover, the remote server 4 is designed to generate a digital authenticity certificate, such as, for example, a pdf file ("portable document format").

Advantageously, the authenticity certificate comprises:
- a unique bar code, which allows assistance operations to the customer;
- a user identifier and an access key, which allows access to the reserved web sites.

The remote server 4 is connected to a database 5, which stores a list of authorised security codes associated uniquely to a plurality of products sold; in other words, the value of the at least one security code associated with a product is different from the values of all the security codes associated with other products of a predetermined manufacturer or a predetermined brand.

Consequently, before a product is placed on sale, an unequivocal association of a security code with the product is performed (by the manufacturer or by a firm authorised by the manufacturer), and the value of the security code is stored in the database 5: this allows a check to be made on whether the product sold is authentic, as explained in more detail below.

Preferably, the security code is an alphanumeric string.

Advantageously, according to a variant of the invention, two unique security codes are associated with each product intended for sale (that is, not yet sold):
- a primary security code SC_1, which may be used only once and which therefore make it possible to control the authenticity of a product only once;
- a secondary security code SC_2, which may be used more than once and which allows the authenticity of a product to be controlled several times after it has been sold, for example for further authenticity checks by the owner of the product or in the case of sale of a used product.

Also, according to the first variant, the database 5 further stores a flag associated with each primary security code SC_1: the flag has a negative value if the respective primary security code SC_1 has not yet been used (that is, the product to which it is associated has not yet been sold), whilst it has a positive value if has been used (that is, the product has been sold).

The use of the flag makes it possible to check whether the product original or not; in effect, if a counterfeiter is able to reproduce a value of the primary security code SC_1 in an electronic authenticity control device 2 associated with a counterfeited product, the server security application receives the value of the primary security code SC_1, reads the positive value of the flag which indicates that the value of the primary security code SC_1 has already been used and therefore generates a message indicating a counterfeiting of the product.

Preferably, the telecommunication network 6 is the Internet, which uses the TCP/IP protocols and the http/https type protocol and to which it is possible to access by means of a browser interface, such as, for example, Internet Explorer or Mozilla.

In this case:
- the server 4 is a Web server which performs the web service;
- the web server 4 contains a website controlled by the firm which manufactures the product to which the electronic authenticity control device 2 is associated or controlled by the company which owns the product trademark;
- the portable electronic device 3 includes a web browser which is able to generate messages compatible with the TCP/IP protocols and the http/https protocol.

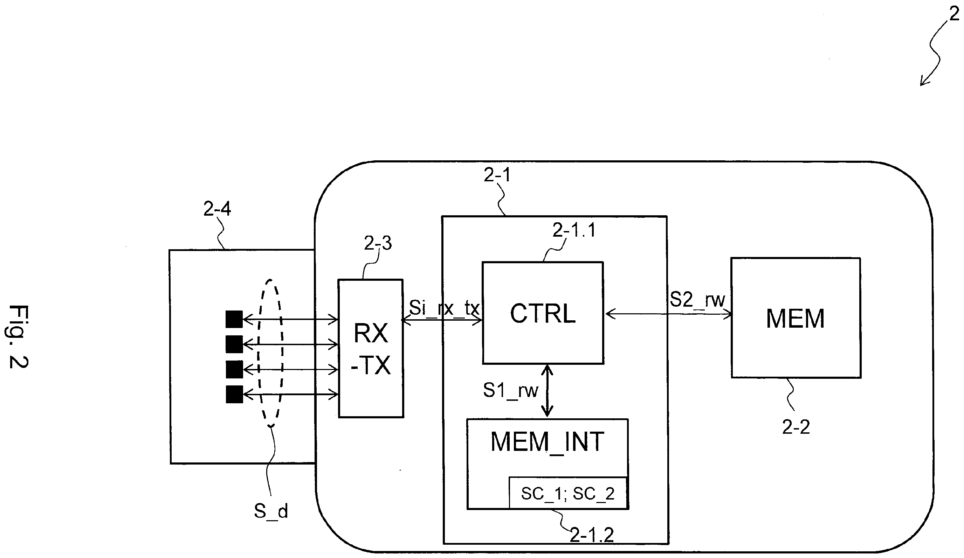

Figure 2 is shows in more detail a block diagram of the electronic authenticity control device 2.

The electronic authenticity control device 2 comprises:
- an electronic security circuit 2-1, which is for example, an integrated circuit;
- a transceiver 2-3 which carries a data signal S_d.

The electronic security circuit 2-1 in turn comprises a control unit 2-1.1 (for example, a microcontroller) and a first memory 2-1.2.

Preferably, the electronic authenticity control device 2 further comprises a second memory 2-2, as explained in more detail below.

The control unit 2-1.1 is electrically connected with the first memory 2-1.2 by means of a first reading/writing signal S1_rw.

The control unit 2-1.1 is also electrically connected with the transceiver 2-3 by means of an internal reception/transmission signal Si_rx_tx.

If the USB protocol is used, the electronic security circuit 2-1, the transceiver 2-3 and the second memory 2-2 are powered by means of the pin for powering the USB connector.

The first memory 2-1.2 is designed to store at least one security code uniquely associated with the product to which the electronic authenticity control device 2 is associated.

Preferably, the security code is a alphanumeric sequence.

If two security codes are associated with the product, the first memory 2-1.2 is configured to store the primary security code SC_1 for controlling the authenticity of the product before its sale and the secondary security code SC_2 for controlling the authenticity of the product after the sale.

The first memory 2-1.2 also has the function of storing the firmware object code performed by the control unit 2-1.1.

The control unit 2-1.1 executes the firmware code for performing a part of the procedure for controlling the authenticity of the product to which is associated the electronic authenticity control device 2.

More specifically, the control unit 2-1.1 controls the access to the first memory 2-1.2, as explained in more detail below.

Preferably, the second memory 2-2 inside the electronic authenticity control device 2 is configured to store the object code of the client security application (that is, the firmware object code which can be run on the control unit 2-1.1), in such a way as to allow its execution on the electronic device 3 if the latter is a fixed or portable personal computer, when the latter is connected for the first time to the electronic authenticity control device 2.

Preferably, the second memory 2-2 has the further function of storing multimedia data associated with the company which manufactures the product to which the electronic authenticity control device 2 is associated or with the company which owns the product trademark; the multimedia data can be, for example, promotional messages from the manufacturer or trademark owner, in the form of images or videos.

In this case, the control unit 2-1.1 controls further the access to the second memory 2-2 and is electrically connected with the second memory 2-2 by means of a second reading/writing signal S2_rw.

Advantageously, the control unit 2-1.1 is configured to allow a free use of the second memory 2-2 by the purchase of the product upon the occurrence of suitable conditions, such as, for example, at the end of the primary procedure for controlling the authenticity of the product with positive result.

In other words, if the primary procedure for controlling the authenticity of a product ends with positive result, the individual purchasing the product may use the electronic authenticity control device 2 as a portable mass storage unit both for reading and writing.

Preferably, the electronic authenticity control device 2 is a portable mass storage unit of small dimensions, which is connected to the electronic device 3 directly or with an adapter connector or with an electrical cable, by means of a suitable interface.

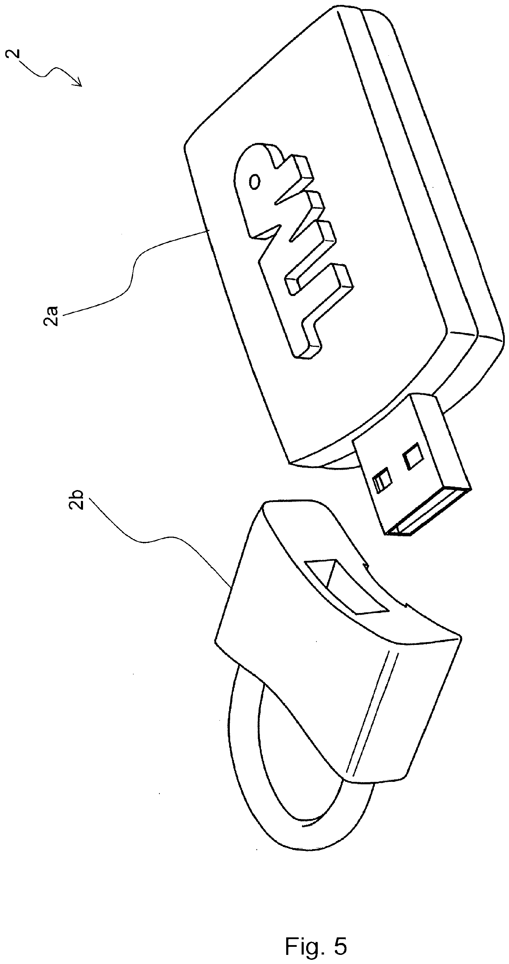

Advantageously, the electronic authenticity control device 2 is a USB stick (also known as "pen drive") as shown in Figure 5, that is, it is a portable mass storage unit with compact dimensions which is connected to the electronic authenticity control device 2 by means of an interface 2-4 which carries the serial protocol of the USB type (Universal Serial Bus, managed by USB Implementers Forum): in this way, the user who has purchased the product to which the USB stick 2 is associated can use the latter as a normal portable data storage device, if suitable conditions occur.

The USB stick 2 uses, alternatively:
- USB connectors type A or B 2-4, based on the protocol with versions 1.1, 2.0 or 3.0;
- mini-USB connectors type A or B 2-4, based on the protocol with versions 1.1, 2.0 or 3.0;
- micro-USB connectors type A or B 2-4, based on the protocol with versions 1.1, 2.0 or 3.0;
- USB connectors type C 2-4, based on the protocol with versions 3.1;
- any connector and USB protocol which will be developed in future.

Figure 5 shows an electronic authenticity control device 2 made with a USB STICK, having a case composed of two portions 2a, 2b, wherein the first portion 2a has the shape substantially of a parallelepiped and the second portion 2b is a cap for covering the USB type connector.

It can be seen in Figure 5 that the raised wording TMP, which means "Tag Memory Pen", is present on the portion 2a of the case.

Preferably, the USB stick 2 is customisable depending on the brands of the product to which it is associated; for example, the outer case of the USB stick comprises the indication of the brand name of the product.

Preferably, the USB stick 2 is customisable in terms of its shape and/or its decoration. in other words, the shape of the case of the electronic authenticity control device 2 may be different from that shown in Figure 5.

More specifically, the case of the electronic authenticity control device 2 can have a shape which depends on the type of product to which it is associated: in this way, the electronic authenticity control device 2 is more attractive for the user interested in purchasing the product to which the USB stick 2 is associated.

For example:
- if the USB stick 2 is associated with a watch, the case of the USB stick 2 has a shape similar to a watch;
- in the case of a bottle of wine, the case of the USB stick 2 has a shape similar to a bottle of wine.

A description is given below of the operation of the electronic control system 1 in the case of a primary procedure for controlling the authenticity of a product with positive result, making reference also to Figures 1, 2 and 3A.

For the purposes of explaining the invention, the following hypotheses are considered for the sake of simplicity:
- a purchaser enters a shop authorised for the sale of a bag, which is therefore authentic;
- the electronic authenticity control device 2 is a USB stick, wherein the first memory 2-1.2 stores the primary security code SC_1 and the secondary security code SC_2 associated uniquely with the product sold together with the USB stick 2;
- the USB stick 2 is fixed to the bag (for example, to a relative handle);
- the purchaser possesses the portable electronic device 3 which is a smartphone that executes a software application (referred to above by "client security application") for controlling the authenticity of the product associated with the USB stick 2;
- the client security application has been previously downloaded by the purchaser on his/her smartphone 3 from the website of a suitable virtual store, for example the website associated with the brands of the smartphone 3;
- the client security application also comprises the IP_ADDR_SRV value of the IP address of the remote web server 4;
- the control unit 2-1.1 of the USB stick 2 is a microcontroller;
- the telecommunication network 6 is the Internet with TCP/IP protocol, to which the smartphone 3 has access by means of a fourth-generation mobile phone network (LTE);
- the long distance radio signal S_r_ld generated by the smartphone 3 is propagated through the telecommunication network 6 up to the remote server 4, which receives a long distance data signal S_d_ld having a useful content equal to that of the long distance radio signal S_r_ld;
- the remote server 4 performs a web service and supports the https protocol.

A purchaser enters a shop and purchases a bag, which comprises the USB stick 2. At the instant t0 the purchaser has purchased the bag and decides to check if it is authentic, so the purchaser connects the USB stick 2 to his/her smartphone 3, by means of a suitable USB cable.

At the instant t1 (after t0) the purchaser sends to his/her smartphone 3 the client security application.

At the instant t2 (after t1) the client security application generates a request REQ for the primary security code SC_1, so the smartphone 3 transmits towards the USB stick 2 the data signal S_d which carries the request REQ for the primary security code SC_1.

At the instant t3 (after t2) the USB stick 2 receives the data signal S_d which carries the request REQ for the primary security code SC_1, so the microcontroller 2-1.1 reads from the first memory 2-1.2 the value of the primary security code SC_1.

At the instant t4 (after t3) the microcontroller 2-1.1 transmits towards the smartphone 3 the data signal S_d which carries the value of the primary security code SC_1.

At the instant t5 (after t4) the smartphone 3 receives the data signal S_d which carries the value of the primary security code SC_1 and stores it in a memory of the smartphone 3.

At the instant t6 (after t5) the client security application starts the browser installed on the smartphone 3.

At the instant t7 (after T6) the client security application, by means of the browser, opens a protected connection (with https security protocol) of the TCP/IP type between the smartphone 3 and the web server 4, using the IP_ADDR_SRV value of the IP address of the web server 4 contained in the same client security application.

Through the connection, the smartphone 3 transmits towards the web server 4 the long distance radio signal S_r_ld which carries a request REQ_WS_LNK for opening the web security service.

In the instants between t7 and t8 the request REQ_WS_LNK propagates through the telecommunication network 6 to the web server 4, which receives the long distance data signal S_d_ld which carries the request REQ_WS_LNK.

At the instant t8 (after t7) the web server 4 receives the long distance data signal S_d_ld which carries the request REQ_WS_LNK for opening the web security service, with protected connection.

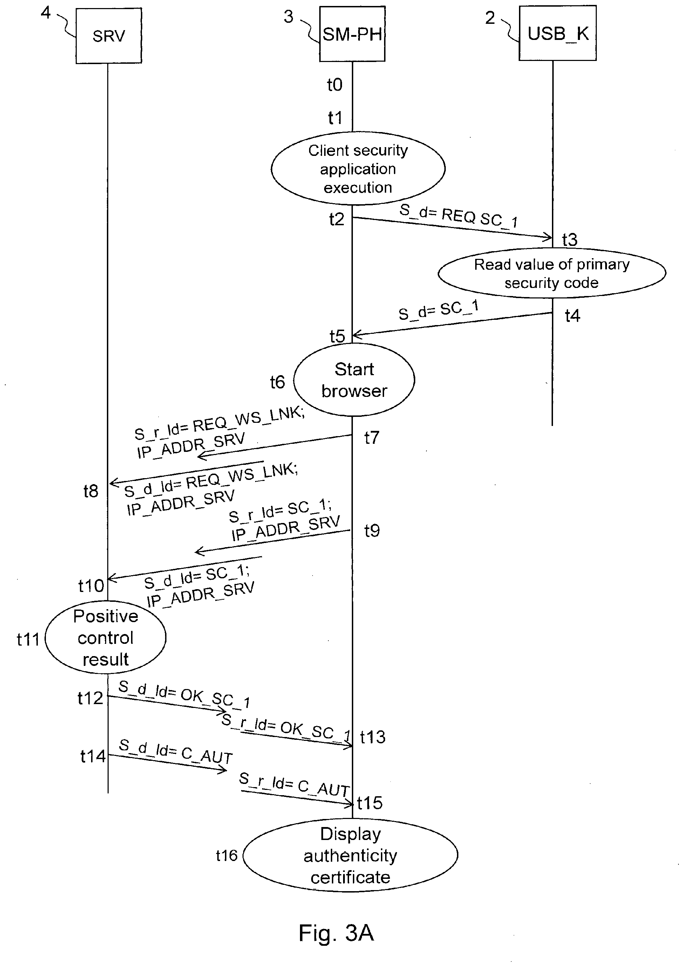

In the instants between t8 and t9 the web security service with protected connection is established between the smartphone 3 and the web server 4, on the basis of the TCP/IP protocol (for simplicity, Figure 3A does not show the further messages exchanged between the smartphone 3 and the web server 4).

At the instant t9 (after t8) the processing unit of the smartphone 3 reads from its memory the value of the primary security code SC_1 (received at the instant t5), the client security application (by means of the browser) generates a message indicating the value of the primary security code SC_1 and the smartphone 3 therefore transmits towards the web server 4 the long distance radio signal S_r_ld which carries the message indicating the value of the primary security code SC_1, using the connection set up previously.

In the instants between t9 and t10 (after t9) the message indicating the value of the primary security code SC_1 propagates through the telecommunication network 6 until reaching the Web server 4, which receives at the instant t10 the long distance data signal S_d_ld which carries the value of the primary security code SC_1.

At the instant t11 (after t10) the server security application (executed on the web server 4) reads from the database 5 the list of the values of the authorised security codes, detects that one of the values is equal to the value of the primary security code SC_1 received and the value of the relative flag is negative, then generates a positive result of the authenticity control; in other words, it is been detected that the product (to which the value of the primary security code SC_1 received is associated) is authentic.

Subsequently, the server security application sets the positive value of the flag associated with the value of the primary security code SC_1 received: in this way, the information is stored that the value has already been used and therefore the product (to which the value of the primary security code SC_1 received is associated) has already been sold, in such a way that in the future it is no longer possible to use the value of the primary security code SC_1 received.

At the instant t12 (after t11) the server security application generates a positive result message OK_SC_1 indicating the positive result of the authenticity control of the product sold, so the web server 4 transmits the long distance data signal S_d_ld which carries the positive result message OK_SC_1.

In the instants between t12 and t13 (after t12) the positive result message OK_SC_1 propagates through the telecommunication network 6 until reaching the smartphone 3, which receives at the instant t13 the long distance radio signal S_r_ld which carries the positive result message OK_SC_1.

At the instant t14 (after t13) the server security application generates a pdf file representing the authenticity certificate C_AUT, so the web server 4 transmits the long distance data signal S_d_ld which carries the pdf file of the authenticity certificate C_AUT.

In the instants between t14 and T15 (after t14) the pdf file of the authenticity certificate C_AUT propagates through the telecommunication network 6 until reaching the smartphone 3, which receives at the instant T15 the long distance radio signal S_r_ld which carries the pdf file of the authenticity certificate C_AUT.

At the instant t15 the client security application generates an image representing the content of the pdf file of the authenticity certificate C_AUT and the image is displayed on the screen of the smartphone 3: in this way, the purchaser has checked that the bag which he/she has purchased is authentic, that is to say, not counterfeit.

Advantageously, at the instant t13 the smartphone 3 receives the long distance radio signal S_r_ld which carries the positive result message OK_SC_1 and the client security application generates a release message indicating an enabling of access to the second memory 2-2 of the USB stick 2, so the smartphone 3 transmits towards the USB stick 2 the data signal S_d which carries the release message.

Subsequently, the USB stick 2 receives the data signal S_d which carries the release message and, therefore, the microcontroller 2-1.1 enables the access in read/write mode to the second memory 2-2, so as to allow a free use by the purchaser of the product.

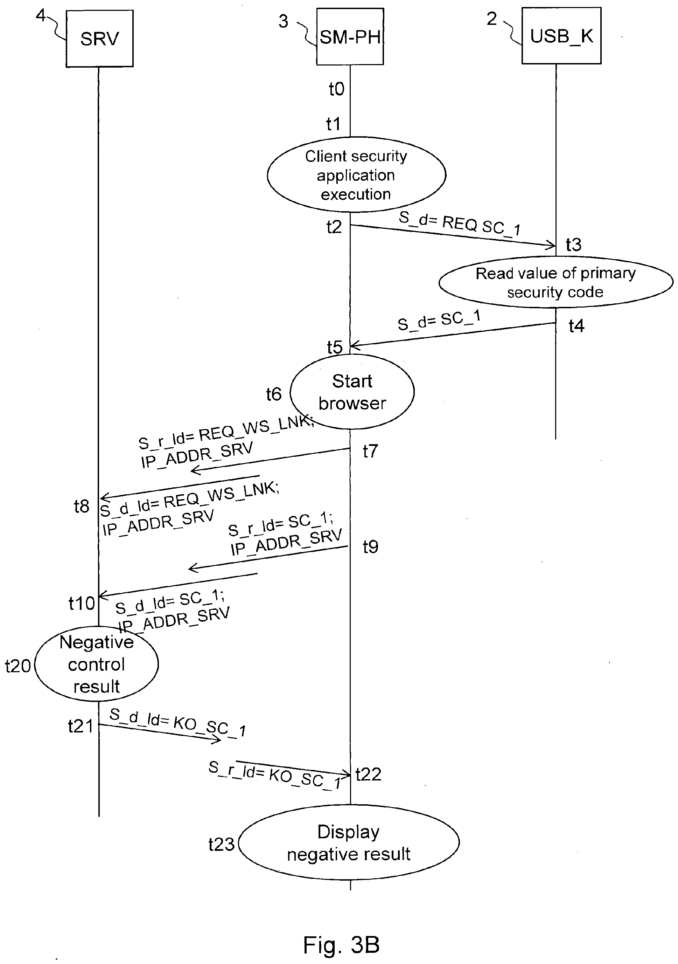

With reference to Figure 3B, the operation of the electronic system 1 for controlling the authenticity of a product with negative result is equal to that with the positive result of Figure 3A until the instant t10.

At the instant t21 (after t10) the server security application of the web server 4 reads from the database 5 the list of the values of the authorised security codes and detects that the value of the primary security code SC_1 received is different from all the values on the list of authorised security codes, so generates a negative result of the authenticity control; in other words, it is been detected that the product (to which the value of the primary security code SC_1 received is associated) is counterfeit, since the value of the primary security code SC_1 received not belong to the list of the authorised primary security codes.

Alternatively, at the instant t21 the server security application detects that one of the values is equal to the value of the primary security code SC_1 received and the value of the relative flag is positive, so generates a negative result of the authenticity control; in other words, it is been detected that the product (to which the value of the primary security code SC_1 received is associated) is counterfeit, since the value of the primary security code SC_1 received has already been used.

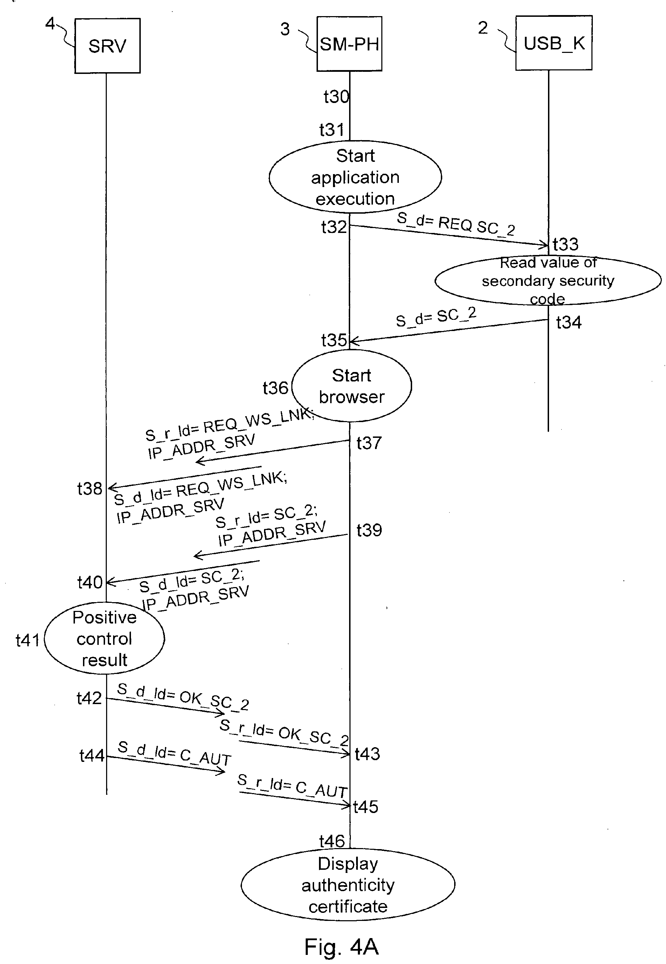

The operation of the electronic control system 1 shown in Figures 4A-4B is similar, respectively, to that of Figures 3A-3B, with the difference that the secondary security code SC_2 is used instead of the primary security code SC_1, for example because the owner of the bag wants to check whether he/she has purchased an authentic bag, or if a purchaser intends to purchase the used bag from the first owner.

More specifically, in Figure 4A the secondary authenticity control procedure has a positive result, that is to say, it is detected that the product sold is authentic.

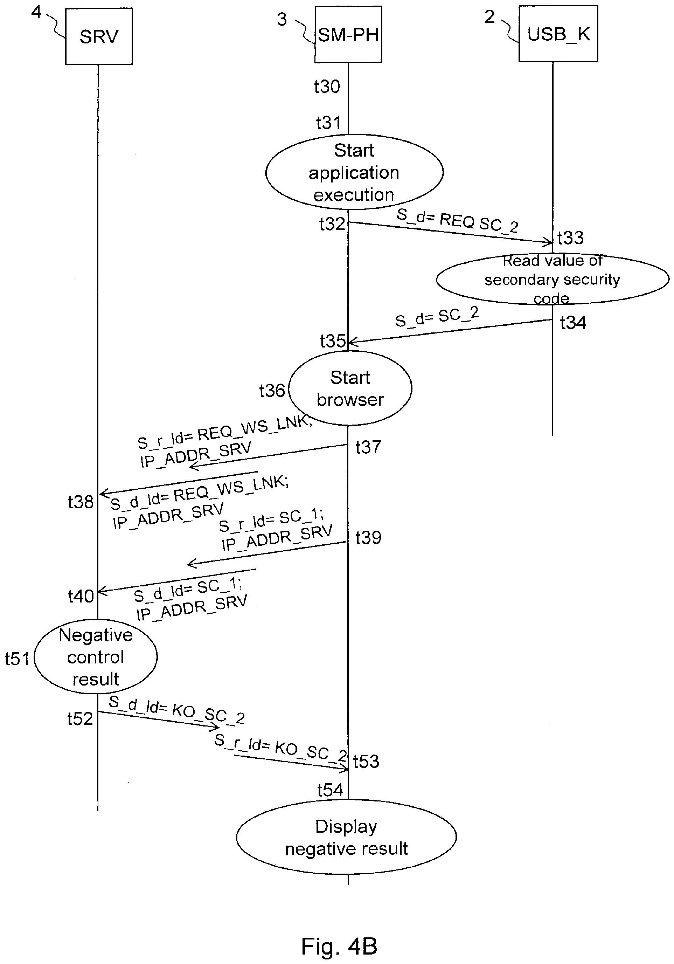

On the other hand, in Figure 4B the secondary authenticity control procedure has a negative result, that is to say, it is detected that the product sold is counterfeit.

If the electronic device 3 is a personal computer of the fixed or portable type, the object code of the client security application is stored in the second memory 2-2 of the electronic authenticity control device 2, together with the IP_ADDR_SRV value of the IP address of the web server 4.

In this case, the operation differs from that of Figures 3A-3B in that between the instant t0 and the instant t1 the data signal S_d is transmitted from the USB stick 2 to the personal computer 3, carrying portions of the software program of the client security application during its execution, wherein the client security application also comprises the value IP_ADDR_SRV of the IP address of the web server 4, so the microprocessor of the personal computer 3 executes the client security application.

Therefore:
- at the instant t0 the purchaser who has purchased the bag and who decides to check if this is authentic connects the USB stick 2 with his/her personal computer 3, so the control unit 2-1.1 of the USB stick 2 reads from the second memory 2-2 portions of the software program of the client security application and the USB stick 2 transmits to the personal computer 3 the data signal S_d which carries the portions of the software program of the client security application, which also comprises the value IP_ADDR_SRV of the IP address of the web server 4;
- at the instant t1 the personal computer 3 receives the data signal S_d which carries the portions of the program of the client security application, so the microprocessor of the personal computer 3 executes the instructions contained in the portions of the software program and extracts the value IP_ADDR_SRV of the IP address of the web server 4, stores it in a memory of the personal computer 3 and the authenticity control procedure starts as explained above.

## Claims

1. An electronic device (2) for controlling the authenticity of a product, the device comprising a control unit (2-1.1), a transceiver (2-3) and a first memory (2-1.2), in which:
- the first memory (2-1.2) is configured to store a primary security code (SC_1) uniquely associated with the product and a firmware object code which can be run on the control unit;
- the transceiver (2-3) is configured to receive (t3) an input data signal (S_d) which carries a request (REQ) for the primary security code (SC_1), and to forward the request on an internal reception/transmission signal (Si_rx_tx),
- the control unit (2-1.1) is configured to:
• receive (t3) the internal reception/transmission signal (Si_rx_tx) which carries the request for the primary security code (SC_1);
• read the value of the primary security code (SC_1) from the first memory (2-1.2);
• generate the internal reception/transmission signal (Si_rx_tx) which carries the read value of the primary security code (SC_1);
- the transceiver (2-3) is further configured to receive the internal reception/transmission signal (Si_rx_tx) which carries the read value of the primary security code (SC_1) and to forward (t4) the value of the primary security code output on the data signal (S_d).

2. The electronic authenticity control device (2) according to claim 1, wherein:
- the first memory (2-1.2) is configured to further store a secondary security code (SC_2) associated uniquely with the product;
- the transceiver (2-3) is configured to receive (t33) the input data signal (S_d) which carries a request (REQ) for the secondary security code (SC_2), and to forward the request on the internal reception/transmission signal (Si_rx_tx),
- the control unit (2-1.1) is configured to:
• receive (t33) the internal reception/transmission signal (Si_rx_tx) which carries the request for the secondary security code (SC_2);
• read the value of the secondary security code (SC_2) from the first memory (2-1.2);
• generate the internal reception/transmission signal (Si_rx_tx) which carries the read value of the secondary security code (SC_2);
- the transceiver (2-3) is further configured to receive the internal reception/transmission signal (Si_rx_tx) which carries the value of the secondary security code (SC_2), and to forward (t34) the value of the secondary security code output on the data signal (S_d).

3. The electronic authenticity control device (2) according to claims 1 or 2, further comprising a second memory (2-2), wherein:
- the second memory is configured to further store data representing an object code of a software program to be run on an electronic device (3) which is electrically connectable to the electronic authenticity control device, the software program comprising a network address identifying a server (4);
- the control unit (2-1.1) is designed to read parts of the software program from the second memory and to forward the parts of the software program on the internal reception/transmission signal (Si_rx_tx);
- the transceiver (2-3) is further configured to receive the internal reception/transmission signal (Si_rx_tx) which carries the portions of the software program and to forward them on the output data signal (S_d).

4. The electronic authenticity control device (2) according to any one of the preceding claims, wherein the transceiver (2-3) complies with the Universal Serial Bus (USB) serial protocol and the electronic device is a USB stick.

5. An electronic system (1) for controlling the authenticity of a product, the system comprising:
- an electronic authenticity control device (2) according to any one of the preceding claims;
- an electronic device (3), in particular of the portable type, electrically connected with the electronic authenticity control device;
- a server (4) connected to the electronic device (3) by means of a telecommunications network (6);
wherein the server is configured to store (5) a list of authorised security codes and
a respective flag, each indicating the use of the security code associated with it, wherein the electronic device (3) is configured to:
• transmit (t2, t32) the data signal (S_d) which carries the request for the primary or secondary security code, to the electronic authenticity control device (2);
• receive (t5, t35) the data signal (S_d) which carries the value of the primary or secondary security code;
• transmit (t7) a long distance signal (S_r_ld) which carries a request for opening a web service, to the server (4);
• transmit (t9) the long distance signal (S_r_ld) which carries the value of the primary security code (SC_1), to the server (4);
wherein the server is configured to:
• receive (t8) a long distance data signal (S_d_ld) which carries the request for opening the web service, from the telecommunications network (6);
• receive (t10) the long distance data signal (S_r_ld) which carries the value of the primary security code (SC_1), from the telecommunications network (6);
• check (t11) if the value of the primary security code received is contained within the values on the list of authorised security codes;
• if the check is positive, further check (t11) if the value of the flag associated with the authorised security code indicates a previous use of the authorised security code;
• transmit (t12, t21) the long distance data signal (S_d_ld) which carries a message indicating a positive or negative result as a function of the check of the flag value, to the electronic device (3);
and wherein the electronic device (3) is further configured to receive (t13, t22) the long distance data signal (S_r_ld) which carries the positive or negative result message.

6. The electronic system (1) according to the preceding claim, wherein the server is further configured, in the case of positive result, to:
- generate (t14) a digital authenticity certificate;
- transmit (t14) the long distance data signal (S_d_ld) which carries the authenticity certificate, to the electronic device (3);
and wherein the electronic device (3) is further configured to:
- receive (t13) the long distance data signal (S_r_ld) which carries the positive result message;
- receive (t15) the long distance data signal (S_r_ld) which carries the authenticity certificate.

7. The electronic system (1) according to any of claims 5 to 6, wherein the electronic device (3) is of the portable type and is selected from the following:
- a smartphone;
- a tablet;
- a laptop.

8. A method for controlling the authenticity a product, comprising the steps of:
a) storing a list of authorised security codes associated with a plurality of products;
b) storing a primary security code (SC_1) uniquely associated with the product and a firmware object code for executing the product authenticity control;
c) transmitting (t2) a data signal (S_d) which carries a request for the primary security code;
d) receiving (t3) the data signal (S_d) which carries the request for the primary security code;
e) reading the stored value of the primary security code (SC_1);
f) transmitting (t4) the data signal which carries the read value of the primary security code (SC_1);
g) receiving (t5) the data signal which carries the read value of the primary security code;
h) transmitting (t7) a long distance signal (S_r_ld) which carries a request for opening a web service;
i) transmitting (t9) the long distance signal (S_r_ld) which carries the value of the primary security code (SC_1);
j) receiving (t8) a long distance data signal (S_d_ld) which carries the request for opening the web service;
k) receiving (t10) the long distance data signal (S_r_ld) which carries the value of the primary security code (SC_1);
l) checking (t11) if the value of the primary security code received is contained within the values on the list of authorised security codes;
m) if the check of the primary security code is positive, further checking (t11) if the value of the flag associated with the authorised security code indicates a previous use of the authorised security code;
n) transmitting (t12) the long distance data signal (S_d_ld) which carries a message indicating a positive or negative result as a function of the check of the flag value.

9. A method according to the preceding claim, wherein step b) comprises further storing a secondary security code (SC_2) associated uniquely with the product, the method further comprising the steps of:
o) transmitting (t32) a data signal (S_d) which carries a request for the secondary security code;
p) receiving (t33) the data signal (S_d) which carries the request for the secondary security code;
q) reading the stored value of the secondary security code (SC_2);
r) transmitting (t34) the data signal which carries the read value of the secondary security code (SC_2);
s) receiving (t35) the data signal which carries the read value of the secondary security code;
t) transmitting (t39) the long distance signal (S_r_ld) which carries the value of the secondary security code (SC_2);
u) receiving (t40) the long distance data signal (S_r_ld) which carries the value of the secondary security code (SC_2);
v) checking (t11) if the value of the secondary security code received is contained within the values on the list of authorised security codes;
w) transmitting (t12) the long distance data signal (S_d_ld) which carries a message indicating a positive or negative result as a function of the check of the secondary security code.

10. A computer program comprising parts of software code designed to run the steps of the method according to claims 8 or 9, when the program is run on at least one computer.
